# EUROPEAN PATENT SPECIFICATION

(11) **EP 4 535 610 B1**
(45) Date of publication and mention of the grant of the patent: **22.07.2026**
(21) Application number: 23815566.7
(22) Date of filing: 03.04.2023
(51) Int. Cl.: H02J 50/40, B60L 5/00, G06Q 30/04, H02J 7/00, H02J 50/10, B60L 15/20, B60L 50/53, B60L 53/12, B60L 53/30, B60L 53/39, B60L 53/65, B60L 53/66

(54) **CONTACTLESS POWER SUPPLY SYSTEM, VEHICLE, AND CONTACTLESS POWER SUPPLY/RECEIVING DEVICE**
KONTAKTLOSES STROMVERSORGUNGSSYSTEM, FAHRZEUG UND KONTAKTLOSE STROMVERSORGUNGS-/EMPFANGSVORRICHTUNG
SYSTÈME D'ALIMENTATION ÉLECTRIQUE SANS CONTACT, VÉHICULE ET DISPOSITIF D'ALIMENTATION/RÉCEPTION ÉLECTRIQUE SANS CONTACT

(30) Priority: 30.05.2022 JP 2022087816
(43) Date of publication of application: 09.04.2025
(73) Proprietor: DENSO CORPORATION, Kariya-shi, Aichi 448-8661 (JP)
(72) Inventor: KIMURA, Kazutaka, Toyota-shi, Aichi 471-8571 (JP); HASHIMOTO, Toshiya, Toyota-shi, Aichi 471-8571 (JP); HASHIMOTO, Makoto, Toyota-shi, Aichi 471-8571 (JP); YAMAGUCHI, Nobuhisa, Kariya-shi, Aichi 448-8661 (JP); KANESAKI, Masaki, Kariya-shi, Aichi 448-8661 (JP); TANI, Keisuke, Kariya-shi, Aichi 448-8661 (JP); OBAYASHI, Kazuyoshi, Kariya-shi, Aichi 448-8661 (JP); TAKEMURA, Yuichi, Kariya-shi, Aichi 448-8661 (JP)
(74) Representative: TBK
(86) International application number: PCT/JP2023/013860
(87) International publication number: WO 2023/233804

(56) References cited:
- JP-A- 2013 073 385
- JP-A- 2014 079 077
- JP-A- 2014 102 696
- JP-A- 2015 228 789
- JP-A- 2020 054 203
- JP-A- 2021 083 143
- JP-A- H08 237 890
- US-A1- 2015 324 798
- US-A1- 2020 101 862
- US-A1- 2021 309 119

## Description

### Field

The present invention relates to a non-contact power feeding system that supplies power in a non-contact manner to a vehicle during traveling, a vehicle, and a non-contact power feeding power receiving device.

### Background

Patent Literature 1 describes a non-contact power feeding system that sets a predetermined amount of money to the amount of money to be collected as power transmission starts, and corrects the amount of money to be collected based on a difference between the predetermined amount of money and a rate corresponding to the amount of power actually transmitted or the amount of power actually received by a vehicle.

### Citation List

### Patent Literature

Patent Literature 1: Japanese Laid-open Patent Publication No. 2014-79077

Document US 2021/309 119 A1 discloses a system and a method for validating electric vehicles in a network. The method may include the following steps: transmitting energy from at least one road section to at least one electric vehicle; recording a magnitude of energy received by said at least one electric vehicle and transmitting a record of said magnitude of energy received for validation; recording a magnitude of energy transmitted from said at least one road section and transmitting a record of said magnitude of energy transmitted for validation; and validating energy usage of said at least one electric vehicle by periodically comparing said magnitude of energy received with said magnitude of energy transmitted to identify at least one of: component failure; and, a potential fraud. The system implements the method in a power-over-the-air network for electric vehicles.

### Summary

### Technical Problem

In order to configure the non-contact power feeding system described in Patent Literature 1, separate components such as a device for measuring the amount of power and a device for detecting the vehicle are required, and thus there is room for improvement.

The present invention has been made in view of the above problem, and an object thereof is to provide a non-contact power feeding system, a vehicle, and a non-contact power feeding power receiving device capable of calculating a power feeding amount and the amount of money to be charged to the vehicle without providing a separate component.

### Solution to Problem

According to an aspect of the present invention, there is provided a non-contact power feeding system as defined in claim 1.

According to another aspect of the present invention, there is provided a non-contact power feeding power receiving device as defined in claim 2.

According to another aspect of the present invention, there is provided a vehicle as defined in claim 3.

### Advantageous Effects of Invention

Since the non-contact power feeding system, the vehicle, and the non-contact power feeding power receiving device according to the present invention determine the start and stop of power feeding from the power feeding device to the vehicle based on the energy balance of the electrical equipment included in the vehicle, it is possible to calculate the power feeding amount and the amount of money to be charged to the vehicle without providing a separate component.

### Brief Description of Drawings

FIG. 1 is a block diagram illustrating a configuration of a non-contact power feeding system according to an embodiment of the present invention.
FIG. 2 is a circuit diagram illustrating a configuration of a vehicle illustrated in FIG. 1.
FIG. 3 is a diagram illustrating an energy balance of the vehicle when power feeding is not performed.
FIG. 4 is a diagram illustrating an energy balance of the vehicle when power feeding is performed.
FIG. 5 is a diagram for explaining a modification of power feeding determination.
FIG. 6 is a diagram for explaining a modification of power feeding determination.
FIG. 7 is a diagram for explaining a calculation example of a power feeding rate.
FIG. 8 is a diagram for explaining a method of acquiring an electrical characteristic of the vehicle.
FIG. 9 is a diagram for explaining a method of acquiring the electrical characteristic of the vehicle.
FIG. 10 is a diagram for explaining a modification of power feeding determination.
FIG. 11 is a diagram for explaining a modification of power feeding determination.
FIG. 12 is a diagram for explaining a modification of power feeding determination.
FIG. 13 is a diagram for explaining an effect according to the modification of the power feeding determination illustrated in FIG. 12.
FIG. 14 is a diagram for explaining a modification of power feeding determination.
FIG. 15 is a diagram for explaining a modification of power feeding determination.
FIG. 16 is a diagram for explaining a modification of power feeding determination.

### Description of Embodiments

Hereinafter, a non-contact power feeding system according to an embodiment of the present invention will be described in detail with reference to the drawings.

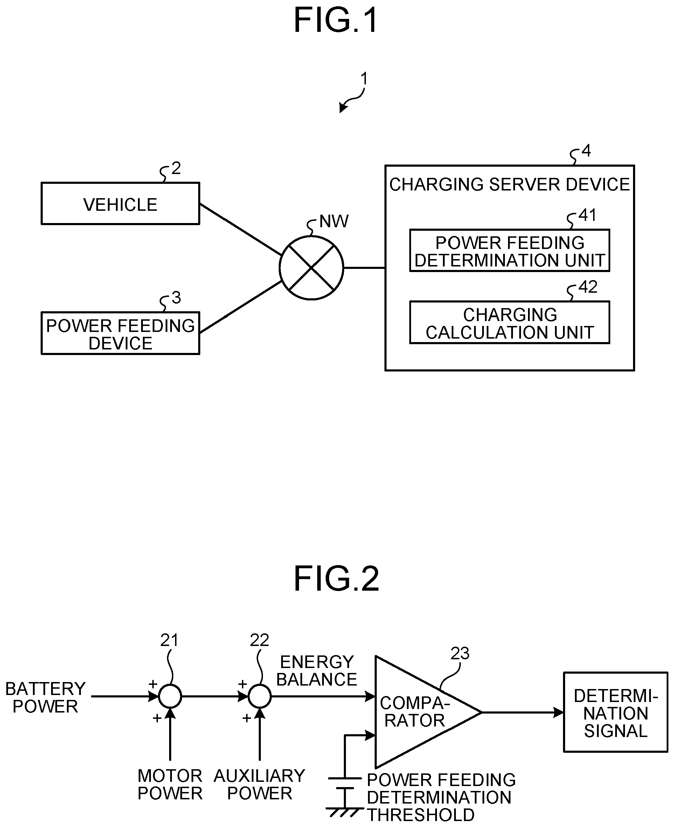

FIG. 1 is a block diagram illustrating a configuration of the non-contact power feeding system according to the embodiment of the present invention. As illustrated in FIG. 1, the non-contact power feeding system 1 according to the embodiment of the present invention is a system that supplies power in a non-contact manner to a vehicle during traveling, and includes a vehicle 2, a power feeding device 3, and a charging server device 4.

The vehicle 2 includes a known vehicle such as a hybrid vehicle (HV), an electric vehicle (EV), a plug-in hybrid vehicle (PHV), or a fuel cell electric vehicle (FCEV), and includes a communication module capable of performing information communication via an electric communication line NW such as an Internet line network or a mobile phone line network. In addition, as illustrated in FIG. 2, the vehicle 2 includes an adder 21 that calculates the sum of an input/output power amount (battery power) of a battery and an input/output power amount (motor power) of a motor, an adder 22 that calculates the sum of an output of the adder 21 and a power consumption amount (auxiliary power) of an auxiliary machine, and a comparator 23 that compares a magnitude relationship between an output (energy balance) of the adder 22 and a power feeding determination threshold and outputs a power feeding determination signal indicating that power feeding from the power feeding device 3 is performed when the output of the adder 22 is larger than the power feeding determination threshold. Regarding the motor power, instead of using a detection value, the motor power corresponding to an operation command for the motor may be read from a map, or a predicted regenerative power amount may be used. In addition, regarding the auxiliary power, instead of using a detection value, the auxiliary power may be read from the map according to on/off of the auxiliary power.

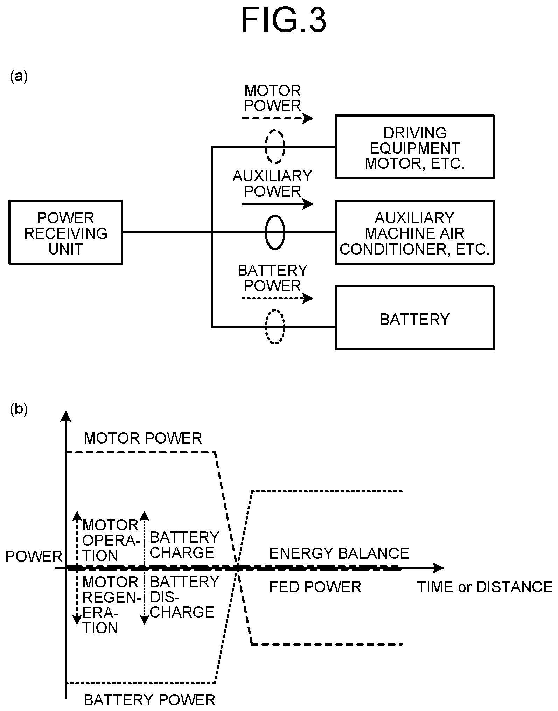

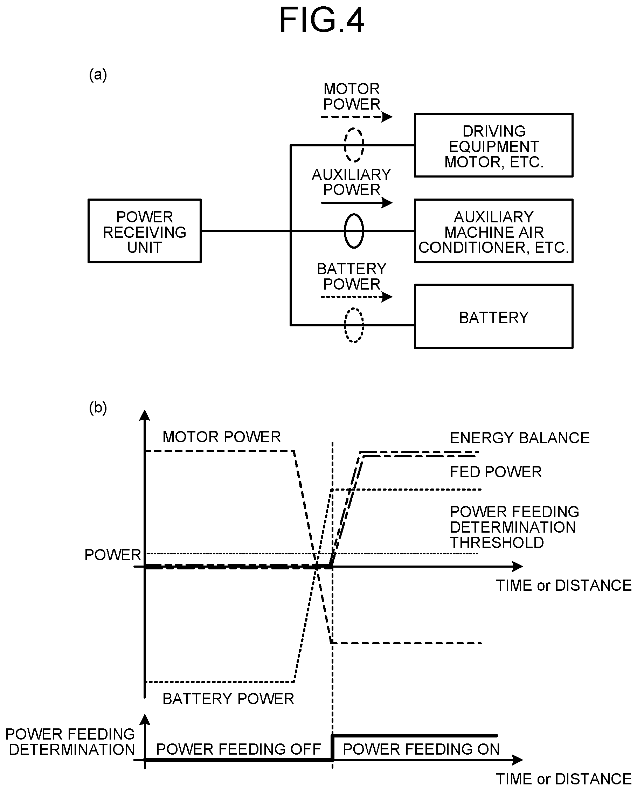

As illustrated in FIGS. 3(a) and (b), the energy balance of electrical equipment included in the vehicle 2 is ±zero due to the power consumption by the electrical equipment such as the motor with respect to the power supply (discharge) from the battery. On the other hand, even when the regenerative power is returned from the motor, the battery is charged, and the energy balance of the vehicle 2 becomes ±zero. In FIG. 3(b), illustration of the auxiliary power is omitted. On the other hand, as illustrated in FIGS. 4(a) and (b), when power fed from the non-contact power feeding system 1 is received via a power receiving unit, the energy balance of the electrical equipment included in the vehicle 2 swings to the positive side. Therefore, the vehicle 2 compares the magnitude relationship between the output of the adder 22 and the power feeding determination threshold using the comparator 23, and when the output of the adder 22 is larger than the power feeding determination threshold, the vehicle 2 determines that the power feeding from the power feeding device 3 is performed, and outputs the power feeding determination signal. Then, the vehicle 2 transmits the power feeding determination signal, via the electric communication line NW, to the charging server device 4 together with unique identification information (vehicle ID) assigned to the vehicle 2. The vehicle 2 may transmit position information (GPS signal or the like) of the vehicle 2 together with the power feeding determination signal so that it is possible to calculate a distance (power feeding section) by which the vehicle 2 moves while the power feeding determination signal is on.

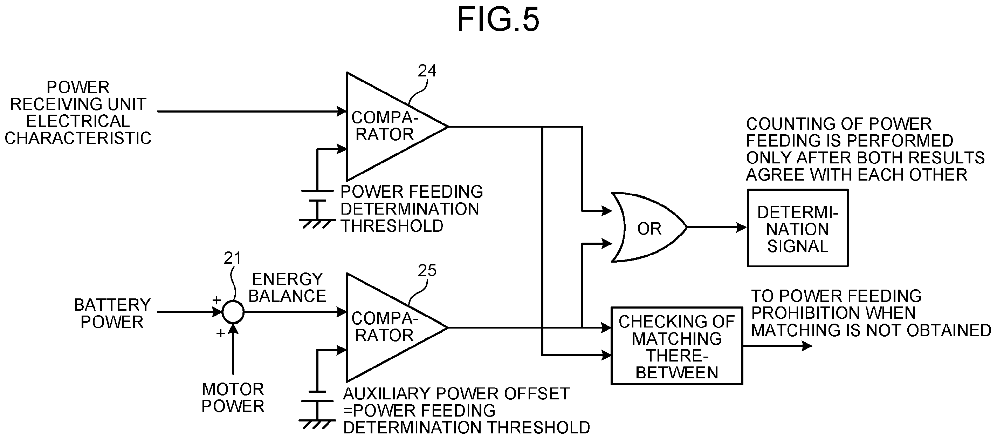

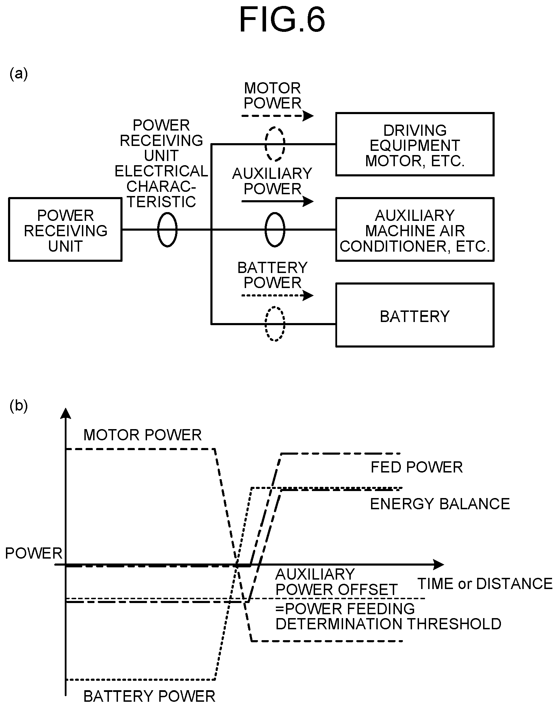

It is also possible to perform the power feeding determination only by the electrical characteristic (at least one of voltage, current, and power) of an output point (before power is sent to the motor, the battery, the auxiliary machine, or the like. See FIG. 6(a)) of the power receiving unit. However, in this case, by disconnecting electrical wiring to which a sensor that detects the electrical characteristic of the output point is connected and providing electrical wiring that bypasses the output point, there is a possibility that fraud is performed to make it appear that power feeding is not performed although power is actually fed. Therefore, as illustrated in FIGS. 5, 6(a), and (b), it is preferable to provide a comparator 24 that performs power feeding determination by comparing a magnitude relationship between the electrical characteristic of the power receiving unit and the power feeding determination threshold, and a comparator 25 that performs power feeding determination by comparing a magnitude relationship between the output (energy balance) of the adder 21 and the power feeding determination threshold (value obtained by offsetting the auxiliary power), and to output the power feeding determination signal when the power feeding determination result of the comparator 24 and the power feeding determination result of the comparator 25 match.

Returning to FIG. 1, the power feeding device 3 includes a rectifier that rectifies a DC voltage from a system, a plurality of inverters that convert the DC voltage rectified by the rectifier into an AC voltage, and a plurality of power transmitters that transmit the AC voltage output from the plurality of inverters to the vehicle 2 side.

The charging server device 4 includes an information processing device such as a workstation, and is connected to the vehicle 2 and the power feeding device 3 via the electric communication line NW. The charging server device 4 performs information communication with the vehicle 2 and the power feeding device 3 via the electric communication line NW. In addition, the charging server device 4 functions as a power feeding determination unit 41 and a charging calculation unit 42 when an arithmetic processing device such as a CPU inside the information processing device executes a computer program.

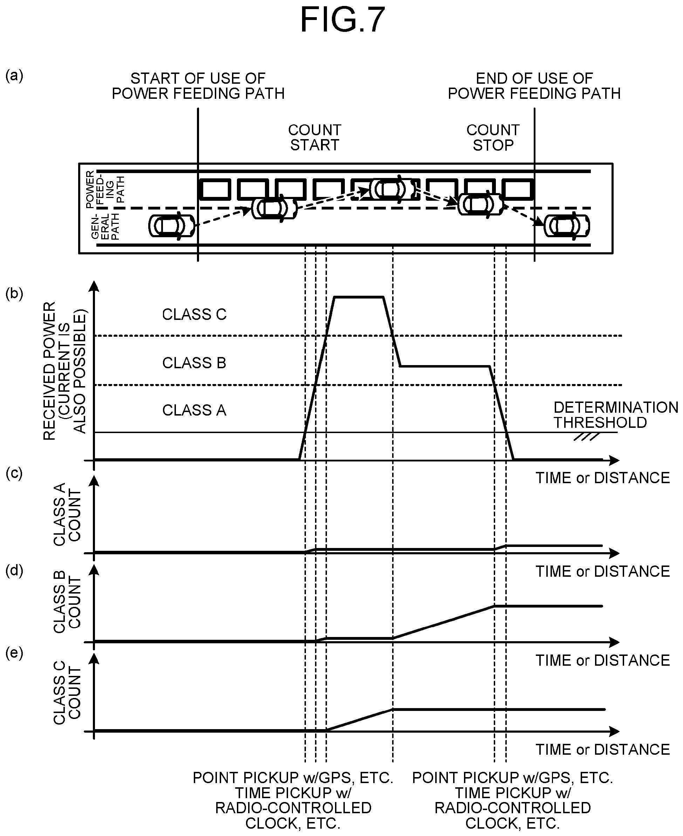

The power feeding determination unit 41 determines a time (power feeding time) and a section (power feeding section) in which a power feeding operation to the vehicle 2 is performed based on the power feeding determination signal and the vehicle ID transmitted from the vehicle 2, and outputs information on the determined power feeding time and power feeding section to the charging calculation unit 42 together with the vehicle ID. The charging calculation unit 42 calculates a power feeding amount to the vehicle 2 based on the power feeding time and the power feeding section output from the power feeding determination unit 41, and charges a power feeding rate (rate to be charged) to a user of the vehicle 2 corresponding to the vehicle ID according to the calculated power feeding amount. As illustrated in FIGS. 7(a) to (e), a received power amount of the vehicle 2 may be classified in advance according to the magnitude of the received power amount, and the charging calculation unit 42 may calculate the power feeding rate according to the power feeding time or the power feeding section of each class.

As is clear from the above description, in the non-contact power feeding system 1 according to the embodiment of the present invention, the charging server device 4 determines the start and stop of power feeding from the power feeding device 3 to the vehicle 2 based on the energy balance of the electrical equipment included in the vehicle 2. Therefore, it is possible to calculate the power feeding amount and the amount of money to be charged to the vehicle 2 without providing a separate component.

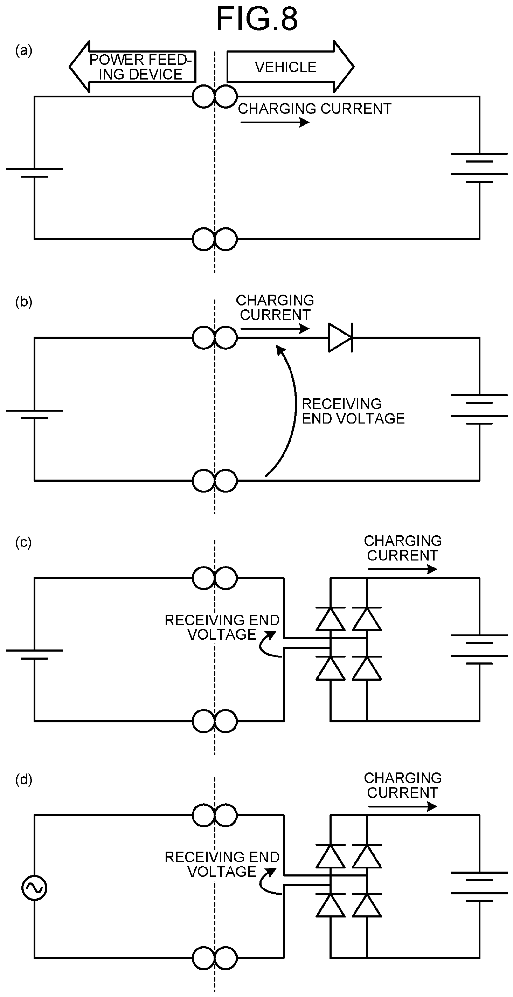

In a case where the power feeding device feeds power in contact with the vehicle, a current (charging current) of an interface unit between the power feeding device and the vehicle may be detected as an electrical characteristic of the power receiving unit as illustrated in FIG. 8(a). In addition, as illustrated in FIG. 8(b), in a case where an element for backflow prevention such as a diode element or a switching element is disposed between the interface unit and the battery, a voltage (receiving end voltage) between the interface unit and the element may be detected as the electrical characteristic of the power receiving unit. Further, as illustrated in FIG. 8(c), in a case where a rectifier for preventing a short circuit at the time of positive and negative reverse connection is disposed between the interface unit and the battery, an input voltage (receiving end voltage) of the rectifier may be acquired as the electrical characteristic of the power receiving unit. In addition, as illustrated in FIG. 8(d), even when the output of the power feeding device is an AC output, the electrical characteristic can be detected at the same detection point. Further, even in a case where the power feeding device feeds power to the vehicle in a non-contact manner, the electrical characteristic can be detected at the same detection point as in a case where the power feeding device feeds power in contact with the vehicle.

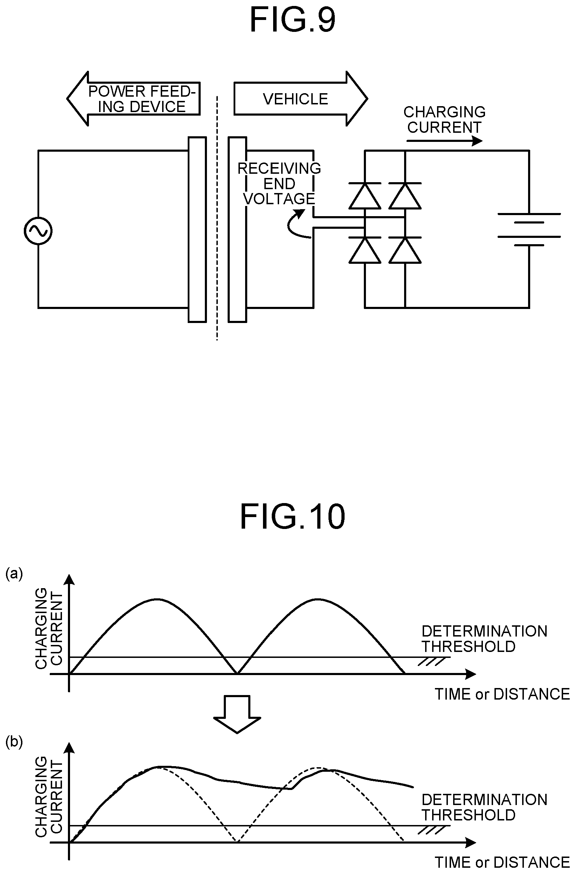

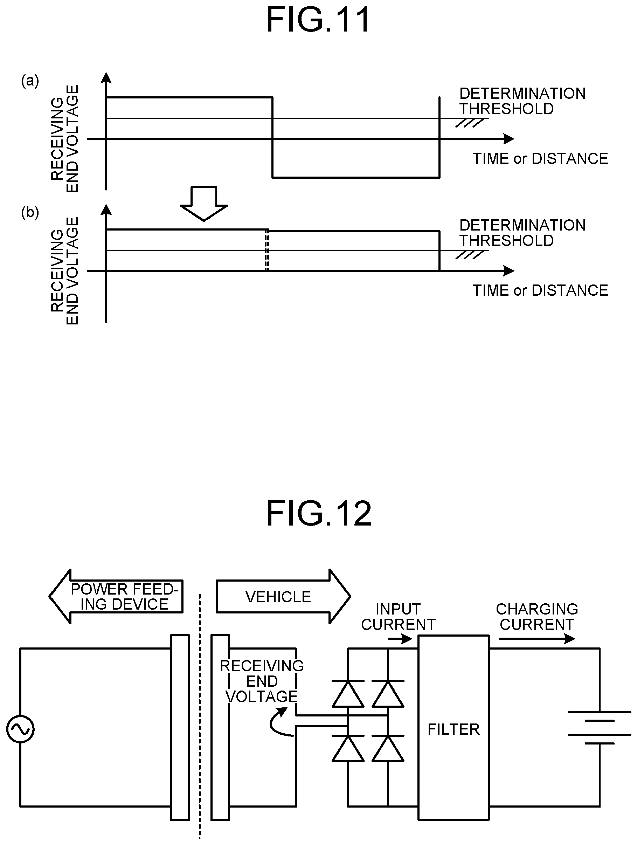

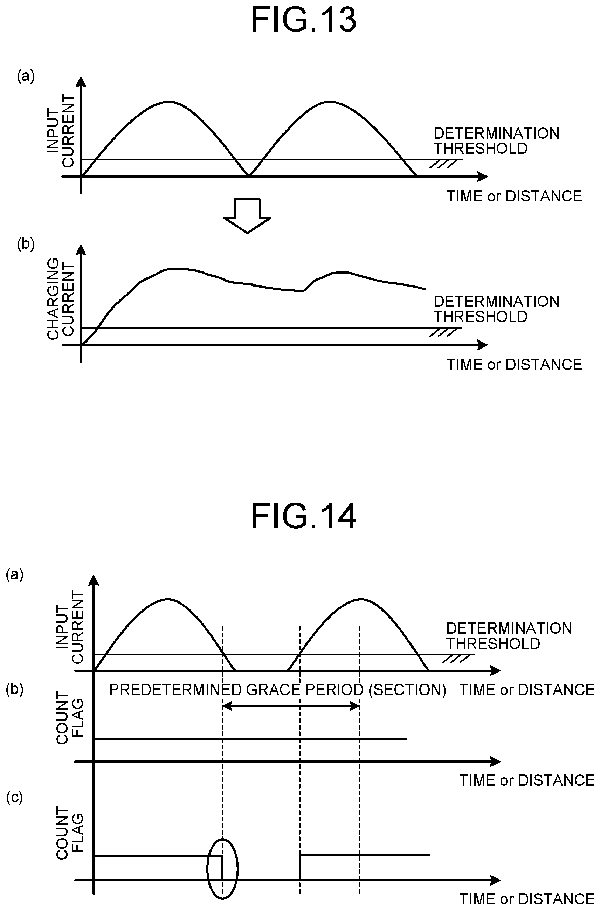

As illustrated in FIG. 9, in a case where the charging current on the output side of an AC unit is detected as the electrical characteristic of the power receiving unit, since the charging current has a half-wave waveform passing through a small current region as illustrated in FIG. 10(a), an input current crosses the determination threshold every cycle, and the number of times of processing increases. Therefore, as illustrated in FIG. 10(b), it is preferable to perform peak hold processing on the charging current and then compare the charging current with the power feeding determination threshold. In a case where the receiving end voltage is detected as the electrical characteristic of the power receiving unit, the peak hold processing may be performed after rectifying the receiving end voltage as illustrated in FIGS. 11(a) and (b). In addition, instead of performing the power feeding determination using the input current as it is, the input current may be input to a filter as illustrated in FIG. 12, and the power feeding determination may be performed using the smoothed input current (charging current) at the subsequent stage of the filter. As illustrated in FIG. 13(a), since the input current has a half-wave waveform passing through the small current region, the input current crosses the power feeding determination threshold every cycle, and the number of times of processing increases. On the other hand, in a case where the smoothed charging current at the subsequent stage of the filter is used, since the number of times of crossing the power feeding determination threshold decreases as illustrated in FIG. 13(b), it is possible to suppress an increase in the number of times of processing.

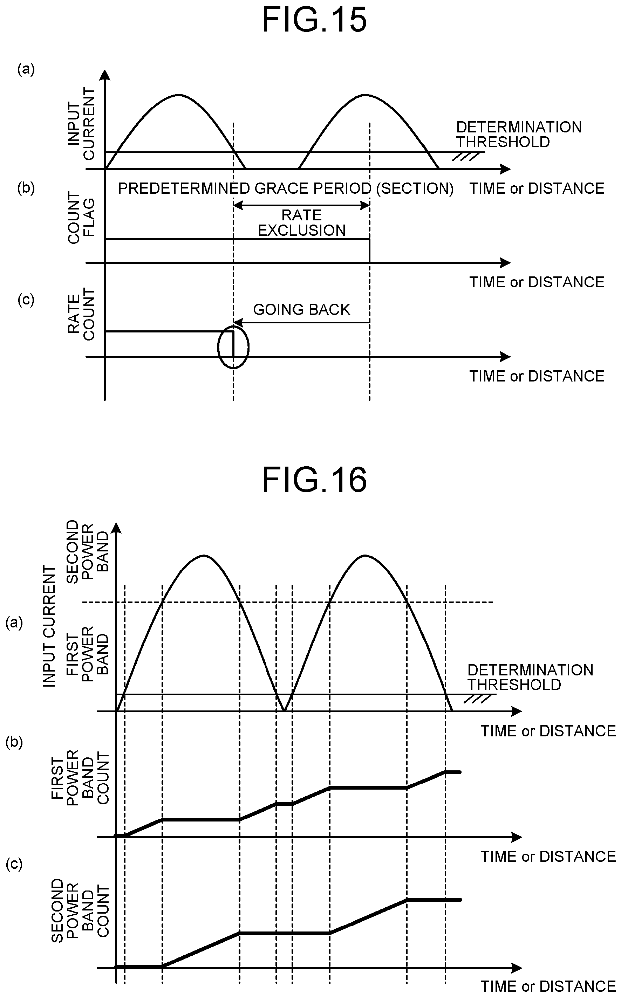

As illustrated in FIGS. 14(a) and (c), when the counting of power feeding is stopped at the timing when the power feeding determination signal is no longer output from the vehicle 2, fine rate calculation increases, and there is a possibility that calculation data increases unnecessarily, leading to memory tightness. Therefore, as illustrated in FIG. 14(b), in a case where the power feeding determination signal is output from the vehicle 2 within a predetermined grace period (grace section) after the power feeding determination signal is not output from the vehicle 2, the counting of the power feeding time and the power feeding section may be continued. In addition, in this case, as illustrated in FIGS. 15(a) to (c), in a case where it is recognized that the output of the power feeding determination signal is stopped beyond the grace period, the power feeding rate may be calculated by going back to the time when the output of the power feeding determination signal is actually stopped. In addition, a charging opportunity loss time during the grace period may be separately counted, and a rate corresponding to the charging opportunity loss time may be subtracted at the time of calculating the power feeding rate. In addition, the unit price of the power feeding rate of the non-contact power feeding system 1 may be determined in consideration of the charging opportunity loss time. In addition, as illustrated in FIGS. 16(a) and (b), the unit price of the power feeding rate of the non-contact power feeding system 1 may be determined according to a receiving power band, and the power feeding rate of the non-contact power feeding system 1 may be calculated in consideration of how many counts are made in each receiving power band. For example, in the examples illustrated in FIGS. 16(a) and (b), the power feeding rate of the non-contact power feeding system 1 can be calculated as (count value of first power band × unit price of first power band power feeding rate) + (count value of second power band × unit price of second power band power feeding rate) + α.

Although the embodiment to which the invention made by the present inventors is applied has been described above, the present invention is not limited by the description and drawings constituting a part of the disclosure of the present invention according to the present embodiment. That is, other embodiments, examples, operation techniques, and the like made by those skilled in the art based on the present embodiment are all included in the scope of the present invention as long as they remain within the scope of the claims.

### Industrial Applicability

According to the present invention, it is possible to provide a non-contact power feeding system, a vehicle, and a non-contact power feeding power receiving device capable of calculating a power feeding amount and the amount of money to be charged to the vehicle without providing a separate component.

### Reference Signs List

1 NON-CONTACT POWER FEEDING SYSTEM
2 VEHICLE
3 POWER FEEDING DEVICE
4 CHARGING SERVER DEVICE
21, 22 ADDER
23, 24, 25 COMPARATOR
41 POWER FEEDING DETERMINATION UNIT
42 CHARGING CALCULATION UNIT

## Claims

1. A non-contact power feeding system (1) that supplies power in a non-contact manner from a power feeding device (3) provided on a traveling path of a vehicle (2) to the vehicle (2) during traveling, the non-contact power feeding system (1) comprising:
a determination means (41) for determining start and stop of power feeding from the power feeding device (3) to the vehicle (2) based on a power balance, which is a sum of an input/output power amount of a battery, an input/output power amount of a motor, and a power consumption amount of an auxiliary machine, the battery, the motor and the auxiliary machine being included in the vehicle (2); and
a charging calculation means (42) included in a charging server device connected to the vehicle (2) and the power feeding device (3) via an electric communication line (NW) for calculating a power feeding amount and an amount of money to be charged to the vehicle (2) based on a determination result of the determination means (41).

2. A non-contact power feeding power receiving device mounted on a vehicle (2) capable of receiving power from a non-contact power feeding system (1) that supplies power in a non-contact manner from a power feeding device (3) provided on a traveling path of the vehicle (2) to the vehicle (2) during traveling, the non-contact power feeding power receiving device comprising:
a determination means for determining start and stop of power feeding from the power feeding device (3) to the vehicle (2) based on a power balance, which is a sum of an input/output power amount of a battery, an input/output power amount of a motor, and a power consumption amount of an auxiliary machine, the battery, the motor and the auxiliary machine being included in the vehicle (2); and
a notification means for notifying a charging device of the non-contact power feeding system (1) of a determination result of the determination means, wherein
the charging device, included in a charging server device connected to the vehicle (2) and the power feeding device (3) via an electric communication line (NW), uses the determination result in a process of calculating a power feeding amount and an amount of money to be charged to the vehicle (2).

3. A vehicle (2) comprising the non-contact power feeding power receiving device according to claim 2.

## Patentansprüche

1. Kontaktloses Leistungszufuhrsystem (1), das eine Leistung auf eine kontaktlose Weise von einer Leistungszufuhreinrichtung (3), die auf einem Fahrweg eines Fahrzeugs (2) bereitgestellt ist, an das Fahrzeug (2) während eines Fahrens zuführt, wobei das kontaktlose Leistungszufuhrsystem (1) aufweist:
eine Bestimmungseinrichtung (41) zum Bestimmen eines Starts und eines Stopps einer Leistungszufuhr von der Leistungszufuhreinrichtung (3) zu dem Fahrzeug (2) basierend auf einem Leistungsabgleich, der eine Summe eines Eingangs-/Ausgangsleistungsbetrags einer Batterie, eines Eingangs-/Ausgangsleistungsbetrags eines Motors, und eines Leistungsverbrauchsbetrags einer Hilfsmaschine, die in dem Fahrzeug (2) umfasst sind, ist; und
eine Ladeberechnungseinrichtung (42), die in einer Ladeservereinrichtung umfasst ist, die mit dem Fahrzeug (2) und der Leistungszufuhreinrichtung (3) über eine elektrische Kommunikationsleitung (NW) verbunden ist, zum Berechnen eines Leistungszufuhrbetrags und eines in Rechnung zu stellenden Geldbetrags an das Fahrzeug (2) basierend auf einem Bestimmungsergebnis der Bestimmungseinrichtung (41).

2. Kontaktlose Leistungszufuhr-Leistungsempfangseinrichtung, die an einem Fahrzeug (2) angebracht ist, die dazu in der Lage ist, Leistung von einem kontaktlosen Leistungszufuhrsystem (1), das eine Leistung auf eine kontaktlose Weise von einer Leistungszufuhreinrichtung (3), die auf einem Fahrweg eines Fahrzeugs (2) bereitgestellt ist, an das Fahrzeug (2) während eines Fahrens zuführt, wobei die kontaktlose Leistungszufuhr-Leistungsempfangseinrichtung aufweist:
eine Bestimmungseinrichtung zum Bestimmen eines Starts und eines Stopps einer Leistungszufuhr von der Leistungszufuhreinrichtung (3) an das Fahrzeug (2) basierend auf einem Leistungsabgleich, der eine Summe eines Eingangs-/Ausgangsleistungsbetrags einer Batterie, eines Eingangs-/Ausgangsleistungsbetrags eines Motors, und eines Leistungsverbrauchsbetrags einer Hilfsmaschine, die in dem Fahrzeug (2) umfasst sind, ist; und
eine Mitteilungseinrichtung zum Informieren einer Ladeinrichtung des kontaktlosen Leistungszufuhrsystems (1) über ein Bestimmungsergebnis der Bestimmungseinrichtung, wobei
die Ladeeinrichtung, die in einer Ladeservereinrichtung umfasst ist, die mit dem Fahrzeug (2) und der Leistungszufuhreinrichtung (3) über eine elektrische Kommunikationsleitung (NW) verbunden ist, das Bestimmungsergebnis in einem Prozess des Berechnens eines Leistungszufuhrbetrags und eines in Rechnung zu stellenden Geldbetrags an das Fahrzeug (2) verwendet.

3. Fahrzeug (2) mit der kontaktlosen Leistungszufuhr-Leistungsempfangseinrichtung gemäß Anspruch 2.

## Revendications

1. Système d'alimentation en énergie sans contact (1) fournissant de l'énergie sans contact depuis un dispositif d'alimentation en énergie (3), disposé sur une trajectoire de déplacement d'un véhicule (2), au véhicule (2) pendant le déplacement, le système d'alimentation en énergie sans contact (1) comprenant :
un moyen de détermination (41) destiné à déterminer le début et l'arrêt de l'alimentation en énergie depuis le dispositif d'alimentation en énergie (3) au véhicule (2) sur la base d'un bilan énergétique, lequel est la somme d'une quantité d'énergie en entrée/sortie d'une batterie, d'une quantité d'énergie en entrée/sortie d'un moteur électrique et d'une quantité de consommation d'énergie d'une machine auxiliaire, la batterie, le moteur électrique et la machine auxiliaire étant inclus dans le véhicule (2) ; et
un moyen de calcul de facturation (42), inclus dans un dispositif serveur de facturation connecté au véhicule (2) et au dispositif d'alimentation en énergie (3) par l'intermédiaire d'une ligne de communication électrique (NW), destiné à calculer une quantité d'alimentation en énergie et un montant à facturer au véhicule (2) sur la base d'un résultat de détermination du moyen de détermination (41).

2. Dispositif de réception d'énergie pour une alimentation en énergie sans contact monté sur un véhicule (2), apte à recevoir de l'énergie depuis un système d'alimentation en énergie sans contact (1) fournissant de l'énergie sans contact depuis un dispositif d'alimentation en énergie (3), disposé sur une trajectoire de déplacement du véhicule (2), au véhicule (2) pendant le déplacement, le dispositif de réception d'alimentation en énergie sans contact comprenant :
un moyen de détermination destiné à déterminer le début et l'arrêt de l'alimentation en énergie depuis le dispositif d'alimentation en énergie (3) au véhicule (2) sur la base d'un bilan énergétique, lequel est la somme d'une quantité d'énergie en entrée/sortie d'une batterie, d'une quantité d'énergie en entrée/sortie d'un moteur électrique et d'une quantité de consommation d'énergie d'une machine auxiliaire, la batterie, le moteur électrique et la machine auxiliaire étant inclus dans le véhicule (2) ; et
un moyen de notification destiné à notifier à un dispositif de facturation du système d'alimentation en énergie sans contact (1) un résultat de détermination du moyen de détermination, dans lequel le dispositif de facturation, compris dans un dispositif serveur de facturation connecté au véhicule (2) et au dispositif d'alimentation en énergie (3) par l'intermédiaire d'une ligne de communication électrique (NW), utilise le résultat de détermination dans un processus de calcul d'une quantité d'alimentation en énergie et d'un montant à facturer au véhicule (2).

3. Véhicule (2) comprenant le dispositif de réception d'énergie pour une alimentation en énergie sans contact selon la revendication 2.
